Europäisches Patentamt

European Patent Office

Office européen des brevets

(19)

(11) Veröffentlichungsnummer: **0 299 374**

**A2**

(12) **EUROPÄISCHE PATENTANMELDUNG**

(21) Anmeldenummer: **88110913.6**

(22) Anmeldetag: **08.07.88**

(51) Int. Cl.⁴: **G05B 19/18**

(30) Priorität: **16.07.87 DE 3723466**

(43) Veröffentlichungstag der Anmeldung:
**18.01.89 Patentblatt 89/03**

(84) Benannte Vertragsstaaten:
**FR GB IT**

(71) Anmelder: **BARRY CONTROLS GMBH**
**Karl-Liebknecht-Strasse 30**
**D-6096 Raunheim(DE)**

(72) Erfinder: **Heiland, Klaus-Peter**
**Ringstrasse 80**
**D-6096 Raunheim(DE)**

(74) Vertreter: **Knoblauch, Ulrich, Dr.-Ing.**
**Kühhornshofweg 10**
**D-6000 Frankfurt am Main 1(DE)**

(54) **Nachstelleinrichtung zum Korrigieren der Lage einer Maschine.**

(57) Bei einer Nachstelleinrichtung (8, 15) zum Korrigieren der Lage einer Maschine (1), insbesondere Meßmaschine, bei der ein erster Teil (3) relativ zu einem zweiten Teil (5) der Maschine mittels einer Positioniervorrichtung (2) längs einer vorbestimmten Bahn bewegbar ist, wird die Maschine (1) mittels federnder, durch Stellsignale beaufschlagter Stellglieder (15) der Nachstelleinrichtung (8, 15) in einer vorbestimmten Lage oberhalb eines die Stellglieder (15) abstützenden Bodens gehalten. Um bei hoher Positioniergenauigkeit der Positioniervorrichtung (2) eine höhere Betriebsgeschwindigkeit zu gestatten, ist dafür gesorgt, daß die Stellsignale für die Stellglieder (15) der Nachstelleinrichtung (8, 15) für jeden Punkt der Bahn des bewegbaren Teils (3) der Maschine (1) vorherbestimmt und den Stellgliedern (15) in einem Zeitpunkt zuführbar sind, der um den Betrag der Gesamtlaufzeit der Stellglieder und der Maschine (1) vom Zeitpunkt der Zuführung eines Stellsignals bis zum Erreichen des diesem Stellsignal zugeordneten Bahnpunktes durch den bewegbaren Teil (3) vor dem Erreichen dieses Bahnpunktes liegt.

Fig.1

EP 0 299 374 A2

## Nachstelleinrichtung zum Korrigieren der Lage einer Maschine

Die Erfindung betrifft eine Nachstelleinrichtung zum Korrigieren der Lage einer Maschine, insbesondere Meßmaschine, bei der ein erster Teil relativ zu einem zweiten Teil der Maschine mittels einer Positioniervorrichtung längs einer vorbestimmten Bahn bewegbar ist, wobei die Maschine mittels federnder, durch Stellsignale beaufschlagter Stellglieder der Nachstelleinrichtung in einer vorbestimmten Lage oberhalb eines die Stellglieder abstützenden Bodens gehalten wird.

Bei einer im wesentlichen aus der Druckschrift "Konstruktion 38 (1986) H. 4, Seiten 139-148 bekannten Nachstelleinrichtung dieser Art ist die Positioniereinrichtung eine numerische Lageregeleinrichtung für einen relativ zu einem gestellfesten Maschinentisch verschiebbaren Träger eines Meßkopfes zum Abtasten der Abmessungen eines auf dem Maschinentisch befestigten Meßobjekts. Die Lageregeleinrichtung enthält einen Digitalrechner, der in Abhängigkeit von einem vorgegebenen Programm Sollwerte für die Bewegung des Trägers vorgibt.

Die eine sehr große Masse aufweisende Maschine ist auf pneumatischen Federelementen in Form von Kolben-Zylinder-Anordnungen gelagert, um zu verhindern, daß Erschütterungen des Bodens, sei es durch benachbarte Maschinen, vorüberfahrende Fahrzeuge oder Trittbewegungen, den Meßvorgang stören. Hierbei kann jedoch eine Verschiebung des Trägers (Portals) dazu führen, daß sich die Maschine verlagert, insbesondere schiefstellt, sei es aufgrund einer Verschiebung des Gesamtschwerpunkts und/oder durch Beschleunigungskräfte. Eine solche Verlagerung kann zu Meßfehlern führen, insbesondere wenn die Messungen mit einer Genauigkeit im Mikrometerbereich ausgeführt werden sollen.

Um Verlagerungen der Maschine aufgrund einer Verschiebung des den Meßkopf tragenden Trägers auszugleichen, enthält die Nachstelleinrichtung Lageregelkreise, die jeweils eines der Federelemente als Stellglied enthalten. Diese Lageregelkreise messen jeweils den Augenblickswert der Lage der Maschine und regeln dann die Verlagerung der Maschine in Abhängigkeit von einem Vergleich mit einem Sollwert durch entsprechende Verstellung des zugeordneten Stellgliedes aus. Hierbei tritt jedoch die Schwierigkeit auf, daß die Maschinen-Lageregeleinrichtung aufgrund ihrer unvermeidlichen eigenen Verzögerungszeit eine Verlagerung der Maschine nicht unverzüglich ausregeln kann. So würde eine Nachstellung der Lage der Maschine durch die Maschinen-Lageregeleinrichtung, bevor die Lageregelung des Trägers einen Beharrungszustand erreicht hat, stets zu spät erfolgen. Es könnte sogar der Fall eintreten, daß die verzögerte Nachstellung der Maschine im Sinne einer zu aufklingenden Schwingungen der Maschine führenden Mitkopplung wirkt, wenn bis zum Wirksamwerden der Nachstellung der Maschine die Verlagerung der Maschine bereits durch eine entsprechende Verschiebung des Trägers im Verlaufe der Abtastung des Meßobjekts wieder rückgängig gemacht ist. Um dadurch bedingte Meßfehler weitgehend auszuschalten, können Meßmaschinen mit einer derartigen Maschinen-Lageregeleinrichtung nur entsprechend langsam verfahren werden. Entsprechend lange dauert der Meßvorgang. Auch bei einer Verschiebung eines Maschinentisches relativ zum Träger eines Arbeitskopfes treten die gleichen Schwierigkeiten auf.

Aus der US-PS 38 31 283 ist eine Meßmaschine bekannt, bei der ein einen Meßkopf tragender Träger an einem Portal horizontal verschiebbar gelagert ist. Das Portal ist über steuerbare Luftfedern auf einem den Maschinentisch aufweisenden, starr auf dem Boden (Untergrund) abgestützten Untergestell der Maschine gelagert. Abhängig von einer Verschiebung des Trägers relativ zum Portal verschiebt sich der Gesamtschwerpunkt von Träger und Portal. Dies führt zu einer unterschiedlichen Durchfederung der einzelnen Luftfedern und damit zu einer die Meßgenauigkeit beeinträchtigenden Schrägstellung des Portals relativ zum Maschinen-Untergestell. Zur Vermeidung dieser Schrägstellung sind sich in Laufrichtung des Trägers erstreckende Kurvenscheiben am Portal befestigt, die durch Ventilstößel von am Träger befestigten Steuerventilen für die Druckluftzufuhr der Luftfedern abgetastet werden und so geformt sind, daß in jeder Trägerposition den Luftfedern ein die Schrägstellung des Portals ausgleichender Luftdruck zugeführt wird. Hierbei werden jedoch Erschütterungen des Bodens über das Untergestell der Maschine ungedämpft auf das am Maschinentisch befestigte Meßobjekt übertragen. Ferner kann die Ansprechverzögerung bzw. Laufzeit des aus den Steuerventilen, Luftfedern und dem Portal gebildeten Systems dazu führen, daß eine Verschiebung des Trägers und die dadurch bewirkte Schrägstellung des Portals bereits im Verlauf der Abtastung des Meßobjekts innerhalb der Ansprechverzögerung bzw. Laufzeit wieder rückgängig gemacht oder eine gegensinnige Verschiebung bewirkt wurde, so daß auch hier erhebliche Schwingungen des Meßkopfes relativ zum Meßobjekt auftreten können und nur eine entsprechend langsame Verschiebung des Trägers zulässig ist.

Der Erfindung liegt die Aufgabe zugrunde, eine Nachstelleinrichtung der gattungsgemäßen Art anzugeben, die bei hoher Positioniergenauigkeit der Positioniervorrichtung eine höhere Betriebsgeschwindigkeit gestattet.

Erfindungsgemäß wird diese Aufgabe dadurch gelöst, daß die Stellsignale für die Stellglieder der Nachstelleinrichtung für jeden Punkt der Bahn des bewegbaren Teils des Maschine vorherbestimmt und den Stellgliedern in einem Zeitpunkt zuführbar sind, der um den Betrag der Gesamtlaufzeit der Stellglieder und der Maschine vom Zeitpunkt der Zuführung eines Stellsignals bis zum Erreichen des diesem Stellsignal zugeordneten Bahnpunktes durch den bewegbaren Teil vor dem Erreichen dieses Bahnpunktes liegt.

Bei dieser Ausbildung werden in jedem Augenblick bei der Verschiebung des bewegbaren Teils auf die Maschine durch die Stellglieder solche einer Verlagerung der Maschine entgegenwirkenden Kräfte ausgeübt, daß die Maschine stets ihre vorbestimmte Ruhelage beibehält, d.h. es werden praktisch simultan mit dem Auftreten von durch die Verschiebung auf die Maschine ausgeübten Verlagerungskräften gleichgroße Gegenkräfte durch die Stellglieder ausgeübt. Die erforderlichen Gegenkräfte lassen sich in einem Probelauf messen oder vorausberechnen und beispielsweise in einem digitalen Speicher digital speichern, aus dem sie dann synchron mit Beginn der Bewegung des bewegbaren Teils der Maschine abgerufen und den Stellgliedern zugeführt werden. Das Verschieben des bewegbaren Teils kann daher mit sehr hoher Geschwin digkeit und dennoch genau durchgeführt werden, ohne daß merkliche Verlagerungen der Maschine auftreten.

Wenn es sich um eine Nachstelleinrichtung für eine Maschine handelt, bei der die Positioniereinrichtung eine numerische Lageregeleinrichtung für einen relativ zu einem gestellfesten Maschinentisch verschiebbaren Träger eines Meßkopfes zum Abtasten der Abmessungen eines auf dem Maschinentisch befestigten Meßobjekts und einen Digitalrechner aufweist, der in Abhängigkeit von einem vorgebenen Programm Sollwerte für die Bewegung des Trägers vorgibt, kann dafür gesorgt sein, daß der Digitalrechner derart ausgebildet ist, daß er die Stellsignale für die Stellglieder der Nachstelleinrichtung in Abhängigkeit von den Sollwerten der Träger-Lageregeleinrichtung bestimmt und den Stellgliedern in dem vorbstimmten Zeitpunkt zuführt, der um den erwähnten Betrag vor dem Zeitpunkt liegt, in dem der Träger die demjenigen Sollwert entsprechende Bewegung ausführt, aus dem dieses Stellsignal abgeleitet ist.

Bei dieser Ausbildung lassen sich die von den Stellgliedern aufzubringenden Gegenkräfte, die einer Verlagerung der Maschine entgegenwirken müssen, durch den Digitalrechner anhand der Sollwerte für die Bewegung des Trägers vorausberechnen, da alle hierfür erforderlichen Parameter im voraus bestimmt und im Arbeitsspeicher des Digitalrechners eingespeichert werden können. So lassen sich alle hierfür erforderlichen Massen, wie die der Maschine, des Trägers und des Meßobjekts, sowie Verzögerungs- bzw. Laufzeiten der Träger-Lageregeleinrichtung, der Maschine und der Stellglieder, zuvor ermitteln und einspeichern, während sich anhand des für das jeweilige Meßobjekt eingegebenen Meßprogramms, d.h. der darin vorgegebenen Bahnanfangs- und Bahnendwerte, Bahngeschwindigkeitswerte und der gegebenenfalls zu verfahrenden Kurvenformen (Geraden oder Kreisbögen), alle Positionen und Beschleunigungen der bewegten Massen, vornehmlich des Trägers, und damit die Ruhe- sowie eine geradlinige und eine Drehbewegung ausübenden Beschleunigungskräfte, die beim Verschieben des Trägers in jedem Augenblick auf den Maschinentisch und damit auf die gesamte Maschine einwirken, für jede Position des Trägers vorausberechnen und anhand der vorgegebenen Übertragungsfunktion der Stellglieder die zugehörigen, den erforderlichen Gegenkräften entsprechenden Stellsignale für die Stellglieder berechnen und mit der Gesamtlaufzeit von Maschine und jeweiligem Stellglied entsprechender Vorlaufzeit vor dem Erreichen des jeweiligen, einem bestimmten Bahnpunkt entsprechenden Lage-Sollwerts des Trägers erzeugen lassen. Auf diese Weise werden Verlagerungen der Maschine von vornherein kompensiert, selbst wenn der Meßkopf-Träger mit hoher Geschwindigkeit bewegt wird. Das Vermessen eines Meßobjekts kann daher mit sehr hoher Geschwindigkeit und dennoch genau durchgeführt werden.

Die Stellglieder können in an sich, z.B. aus der DE-OS 25 33 479, bekannter Weise jeweils eine pneumatische, die Maschine abstützende Kolben-Zylinder-Anordnung aufweisen, deren Druck durch ein Stellsignal steuerbar ist. Derartige Stellglieder sind aufgrund ihrer niedrigen Eigenfrequenz besonders zur passiven Isolation der Meßmaschine gegenüber mechanischen Störschwingungen geeignet und ermöglichen gleichzeitig auf einfache Weise eine Einstellung ihres Luftdrucks und damit der Gegenkräfte durch Stellsignale.

Besonders günstig ist eine Ausbildung derartiger Stellglieder, bei der der Druck im Zylinder wenigstens einer der Kolben-Zylinder-Anordnungen durch einen weiteren, in Abhängigkeit von dem Stellsignal verstellbaren Kolben einstellbar ist. Zwar ist es auch möglich, den Druck im Zylinder durch Zu- oder Abführen von Druckluft über ein stetig steuerbares Ventil zu steuern, doch hat eine Doppelkolben-Zylinder-Anordnung den Vorteil, daß sie so ausgebildet werden kann, daß sie mit einer höheren Stellgeschwindigkeit verstellbar ist.

Die Erfindung und ihre Weiterbildungen werden nachstehend anhand der Zeichnung bevorzugter Ausführungsbeispiele beschrieben. Es zeigen:

Fig. 1 ein schematisches Blockschaltbild einer Lageregelvorrichtung für eine Meßmaschine mit einer erfindungsgemäßen Nachstelleinrichtung und

Fig. 2 ein abgewandeltes Stellglied, das ebenfalls für die Meßmaschine nach Fig. 1 verwendet werden kann.

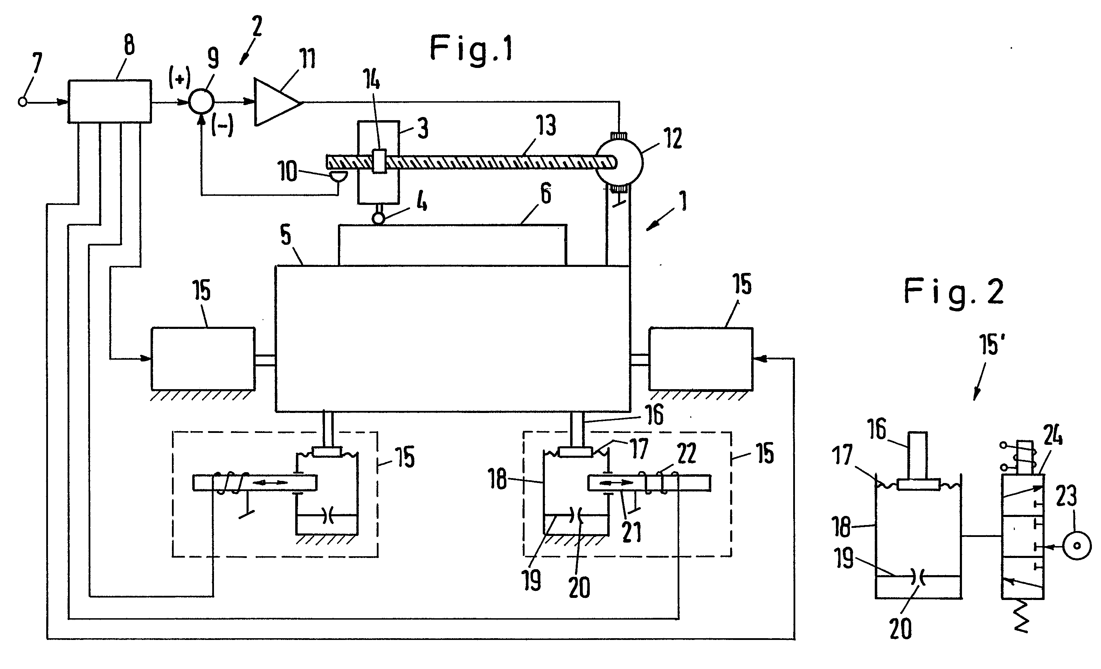

Nach Fig. 1 ist eine eine große Masse aufweisende Meßmaschine 1 mit einer numerischen Lageregeleinrichtung 2 für einen Träger 3 eines Meßkopfes 4 versehen, der ein auf einem gestellfesten Maschinentisch 5 befestigtes Meßobjekt 6 zur Ermittlung seiner Abmessungen abtastet. Hierbei bewirkt die Lageregeleinrichtung 2 eine Verschiebung des Meßkopfes 4 längs der Oberfläche des Meßobjekts 6 nach einem über einen Anschluß 7 in einen Digitalrechner 8 eingegebenen Programm. Das Programm kann durch einen Magnetband- oder Lochstreifenleser von einem Magnetband bzw. Lochstreifen abgetastet oder durch eine Tastatur über den Anschluß 7 eingegeben werden. Es ent hält Anfangs- und Endwerte sowie Kurvenformen von Bahnabschnitten, längs denen der Träger 3 und damit der Meßkopf 4 verschoben werden soll, sowie gegebenenfalls Bahngeschwindigkeitswerte, die die Geschwindigkeit bestimmen, mit der der Träger 3 verschoben wird. Der Digitalrechner 8 berechnet anhand der eingegebenen Daten entsprechende Lage-Sollwerte und führt diese einem Vergleicher 9 mit einer vorprogrammierten, der gewünschten Bahngeschwindigkeit des Trägers 3 entsprechenden Folgefrequenz zu. Der Vergleicher 9 vergleicht die Lage-Sollwerte mit ihm von einem Lage-Fühler 10 zugeführten Lage-Istwerten und verstellt in Abhängigkeit von einer ermittelten Abweichung über einen Regelverstärker 11 einen Stellmotor 12. Dieser verschiebt über eine von ihm angetriebene Gewindespindel 13, die mit einer am Träger 3 befestigten Mutter 14 in Eingriff steht, den Träger 3 so lange in einer dem Vorzeichen der Regelabweichung entsprechenden Richtung, bis die Regelabweichung weitgehend verschwunden ist. Hierbei erfaßt der Fühler 10 die Drehwinkellage der Gewindespindel als Maß für die Lage des Trägers 3. Obwohl zur Vereinfachung der Darstellung eine den Träger 3 in nur einer Richtung verschiebende Ein-Koordinaten-Regeleinrichtung dargestellt ist, handelt es sich in der Praxis um eine Drei-Koordinaten-Regeleinrichtung zur Verschiebung des Trägers 3 in drei zueinander senkrechten Richtungen, wobei die Regelkreise für die beiden nicht dargestellten Koordinaten im Prinzip ebenso wie der dargestellte Regelkreis ausgebildet sind, der Digitalrechner 8 jedoch für alle drei Regelkreise vorgesehen ist und zyklisch auf die einzelnen Regelkreise umgeschaltet wird. Hierbei kann auch der Vergleicher 9 einen Teil des Digitalrechners 8 bilden. Der Stellmotor 12 ist für die vertikale Verstellung des Trägers 3 relativ zum Maschinentisch 5 verschiebbar gelagert. Der Meßkopf 4 ist vertikal relativ zum Träger 3 gegen eine Federkraft verschiebbar, und seine Verschiebung gegenüber dem Maschinentisch 5 wird als Maß für die Lage des durch den Meßkopf 4 abgetasteten Punktes gegenüber einem Bezugspunkt - bei Abtastung der Oberseite des Meßobjekts 6 bildet die Oberseite des Maschinentisches 5 den Bezugspunkt - ausgewertet.

Der Maschinentisch 5 und damit die gesamte Maschine 1 ist in vertikaler und horizontaler Richtung durch Stellglieder 15 abgestützt, die als Luft-Federelemente ausgebildet sind, so daß sie die Meßmaschine passiv gegenüber mechanischen Störschwingungen des Bodens isolieren.

Auch der Träger 3 stützt sich mittelbar auf dem Maschinentisch 5 ab, so daß eine Verschiebung des Trägers 3 mit konstanter Geschwindigkeit in horizontaler Richtung zu einer Verlagerung des Gesamtschwerpunktes von Träger 3 und Maschine 1 und damit zu einer Schiefstellung der Maschine 1 aufgrund der luftgefederten Lagerung der Maschine führen kann. Bei einer (positiven oder negativen) Beschleunigung des Trägers 3 werden zusätzlich Beschleunigungskräfte auf die Maschine 1 ausgeübt, die aufgrund der luftgefederten Lagerung zusätzlich zu einer entsprechenden Verlagerung durch eine Verschiebung und Drehung der Maschine führen. Um dies und dadurch bedingte Meßfehler zu verhindern, sind die Stellglieder 15 durch vom Digitalrechner 8 erzeugte Stellsignale so verstellbar, daß die Maschine 1 ihre Ruhelage unabhängig von Verschiebungen des Trägers 3 jederzeit beibehält. In der Zeichnung sind nur vier Stellglieder 15 dargestellt. Tatsächlich sind aber auf der Unterseite des Maschinentisches 5 wenigstens drei nicht in einer gemeinsamen Vertikalebene liegende vertikal wirkende Stellglieder 15 und an jeder Seite des Maschinentisches 5 soviele horizontal wirkende Stellglieder 15 vorgesehen, wie zur Einhaltung einer vorbestimmten Lage der Meßmaschine 1 mit statischer Bestimmtheit erforderlich sind.

Die Stellglieder 15 bestehen aus einem sich am Maschinentisch 5 abstützenden Kolben 16, der durch eine Membran 17 abgedichtet in einem Druckluft aufweisenden Zylinder 18 verschiebbar gelagert ist. Der Zylinder 18 ist durch eine Trennwand 19, die von einer Drossel 20 durchsetzt ist, in zwei Kammern unterteilt. Durch die Seitenwand der durch den Kolben 16 begrenzten Zylinderkammer ist ein weiterer Kolben 21 abgedichtet hindurchgeführt, der elektromotorisch über einen nicht dargestellten Leistungsverstärker durch ein Stellsignal des Digitalrechners 8 zur Änderung des Drucks im Zylinder 18 und damit der vom jeweiligen Stellglied 15 auf den Maschinentisch 5 bzw. die Maschine 1 ausgeübten Gegenkraft verstellbar ist. Als Antrieb 22 für den Kolben 21 ist hier ein Tauchspul-System dargestellt. Statt dessen kann aber auch ein anderer stetig wirkender Linearmotor, z.B. ein Rotationsmotor mit Ritzel und Zahnstange, die mit dem Kolben 21 verbunden ist, vorgesehen sein.

In einem Speicher des Digitalrechners 8 sind alle erforderlichen Parameter zur Berechnung der Größe und des Zeitpunkts von Stellsignalen gespeichert, die den Stellgliedern 15 zum Ausgleichen von Verlagerungen der Maschine 1 aufgrund einer Verschiebung des Trägers 3 zugeführt werden müssen. Wenn der Träger 3 beispielsweise nach rechts in Fig. 1 verschoben wird, um die Oberfläche des Meßobjekts 6 durch den Meßkopf 4 abzutasten, wird das linke untere Stellglied 15 durch die Rechtsverschiebung des Trägers 3 entlastet und das rechte untere Stellglied 15 zusätzlich belastet. Die Maschine 1 hat daher das Bestreben, sich durch diese Gewichtsverlagerung schräg zu stellen. Außerdem wirken beim Anfahren und Abbremsen des Trägers 3, d.h. bei jeder Änderung der Horizontalgeschwindigkeit des Trägers 3, zum einen horizontale Beschleunigungskräfte und zum anderen durch die Beschleunigungskräfte hervorgerufene Drehmomente auf die Maschine 1, die ebenfalls bestrebt sind, die Maschine 1 aus der dargestellten Ruhelage zu verlagern. Die in jedem Augenblick der Verschiebung des Trägers 3 durch die Stellglieder 15 zur Kompensation der Verlagerung der Maschine 1 auszuübenden Gegenkräfte lassen sich anhand der für den Träger 3 eingegebenen oder vom Digitalrechner 8 berechneten Lage-Sollwerte sowie der bewegten und unbewegten Massen, wie der Masse des Trägers 3, des Objektes 6 und des Maschinentisches 5, sowie der Geschwindigkeitsänderung des Trägers 3 anhand der Folgefrequenzen der Lage-Sollwerte nach Betrag und Richtung vorausberechnen. Der Digitalrechner 8 ist daher so ausgebildet, sei es programmiert oder fest verdrahtet, daß er die von jedem einzelnen Stellglied 15 aufzubringenden Gegenkräfte anhand der Lage-Sollwerte des Trägers 3 und der gespeicherten Massen-Daten berechnet und unter Berücksichtigung der ebenfalls eingespeicherten Übertragungsfunktion der Stellglieder 15 für jedes Stellglied 15 ein entsprechendes Stellsignal berechnet und dieses Stellsignal in einem Zeitpunkt an das betreffende Stellsignal 15 abgibt, daß das Stellglied 15 die erforderliche Gegenkraft zumindest angenähert in dem Zeitpunkt ausübt, in dem eine nach Betrag und Richtung weitgehend gleiche Kraft durch die Verstellung des Trägers 3 auf die Maschine 1 ausgeübt wird. Alle Kräfte, die bestrebt sind, die Maschine 1 aufgrund einer Verschiebung des Trägers 3 zu verlagern, werden daher praktisch simultan im Augenblick ihrer Entstehung durch die Stellglieder 15 kompensiert. Die Maschine 1 behält daher stets ihre Ruhelage bei, auch wenn der Träger 3 rasch beschleunigt und mit hoher Geschwindigkeit verfahren wird. Das Ausmessen des Meßobjekts 6 kann daher mit entsprechend hoher Geschwindigkeit erfolgen.

Fig. 2 zeigt ein abgewandeltes Stellglied 15', bei dem anstelle des zweiten Kolbens 21 und des elektromotorischen Antriebs 22 Druckluft aus einer Druckluftquelle 23 über ein Magnetventil 24 in den Zylinder 18 der Kolben-Zylinder-Anordnung 16, 18 zur Erhöhung des Drucks zuführbar oder zur Verminderung des Drucks über das Magnetventil 24 aus dem Zylinder 18 abführbar ist. Das Magnetventil 24 ist ein drosselndes Wegeventil mit drei Anschlußöffnungen und zwei drosselnden Querschnitten, das durch ein seinem Betätigungsmagneten zuführbares Stellsignal gegen die Kraft einer Feder für beide Strömungsrichtungen stetig einstellbar ist. Stattdessen kann jedoch auch ein durch ein pulsbreitenmoduliertes Stellsignal gesteuertes, magnetisch betätigbares 3/3-Wegeventil verwendet werden. Die Ausbildung der Stellglieder 15 nach Fig. 1 hat jedoch den Vorteil, daß sie eine raschere Druckeinstellung ermöglicht, weil zur Verzögerung des Betätigungsmagneten des Magnetventils 24 noch die Verzögerungszeit hinzukommt, die sich durch die endliche Geschwindigkeit ergibt, mit der die Druckluft aus der Druckluftquelle 23 in den Zylinder 18 strömt.

Eine weitere Abwandlung der Stellglieder 15 kann darin bestehen, daß anstelle der pneumatischen Federung eine Feder aus Metall oder Gummi, gegebenenfalls mit einem pneumatischen oder hydraulischen Dämpfer, verwendet wird, deren Federkraft durch einen Stellmotor verstellt wird. Eine pneumatische Feder hat jedoch gegenüber einer mechanischen Feder den Vorteil, daß sie sich mit niedrigerer Eigenfrequenz ausbilden läßt, die ihrerseits eine bessere Schwingungsisolation bedeutet.

Statt bei einer Meßmaschine ist die Nachstelleinrichtung auch bei anderen Maschinen mit einer Positioniervorrichtung anwendbar, z.B. bei einem sogenannten "Laser-Stepper", der zur Herstellung integrierter Schaltungen verwendet wird.

## Ansprüche

1. Nachstelleinrichtung zum Korrigieren der Lage einer Maschine, insbesondere Meßmaschine, bei der ein erster Teil relativ zu einem zweiten Teil der Maschine mittels einer Positioniervorrichtung längs einer vorbestimmten Bahn bewegbar ist, wobei die Maschine mittels federnder, durch Stellsignale beaufschlagter Stellglieder der Nachstelleinrichtung in einer vorbestimmten Lage oberhalb eines die Stellglieder abstützenden Bodens gehalten wird, **dadurch gekennzeichnet,** daß die Stellsignale für die Stellglieder (15; 15´) der Nachstelleinrichtung (8, 15) für jeden Punkt der Bahn des bewegbaren Teils (3) der Maschine (1) vorherbestimmt und den Stellgliedern (15; 15´) in einem vorbestimmten Zeitpunkt zuführbar sind, der um den Betrag der Gesamtlaufzeit der Stellglieder und der Maschine (1) vom Zeitpunkt der Zuführung eines Stellsignals bis zum Erreichen des diesem Stellsignal zugeordneten Bahnpunktes durch den bewegbaren Teil (3) vor dem Erreichen dieses Bahnpunktes liegt.

2. Nachstelleinrichtung nach Anspruch 1 für eine Maschine, bei der die Positioniereinrichtung eine numerische Lageregeleinrichtung (2) für einen relativ zu einem gestellfesten Maschinentisch (5) verschiebbaren Träger (3) eines Meßkopfes (4) zum Abtasten der Abmessungen eines auf dem Maschinentisch (5) befestigten Meßobjekts (6) und einen Digitalrechner (8) aufweist, der in Abhängigkeit von einem vorgegebenen Programm Sollwerte für die Bewegung des Trägers vorgibt, dadurch gekennzeichnet, daß der Digitalrechner (8) derart ausgebildet ist, daß er die Stellsignale für die Stellglieder (15; 15´) der Nachstelleinrichtung (8, 15) in Abhängigkeit von den Sollwerten der Träger-Lageregeleinrichtung (2) bestimmt und den Stellgliedern (15; 15´) in dem vorbestimmten Zeitpunkt zuführt, der um den erwähnten Betrag vor dem Zeitpunkt liegt, in dem der Träger (3) die demjenigen Sollwert entsprechende Bewegung ausführt, aus dem dieses Stellsignal abgeleitet ist.

3. Nachstelleinrichtung nach Anspruch 2, dadurch gekennzeichnet, daß die Stellglieder (15; 15´) jeweils eine pneumatische, die Maschine (1) abstützende Kolben-Zylinder-Anordnung (16, 18) aufweisen, deren Druck durch ein Stellsignal steuerbar ist.

4. Nachstelleinrichtung nach Anspruch 3, dadurch gekennzeichnet, daß der Druck im Zylinder (18) wenigstens einer der Kolben-Zylinder-Anordnungen (16, 18) durch einen weiteren, in Abhängigkeit von dem Stellsignal verstellbaren Kolben (21) einstellbar ist.

Fig.1

Fig.2